# EUROPEAN PATENT SPECIFICATION

(11) **EP 1 345 386 B1**
(45) Date of publication and mention of the grant of the patent: **23.05.2007**
(21) Application number: 03250931.7
(22) Date of filing: 14.02.2003
(51) Int. Cl.: H04L 29/06, H04L 12/22

(54) **Method of controlling network access in wireless environment and recording medium therefor**
Verfahren und Aufzeichungsmedium zur Steuerung des Netzzuganges in einer drahtlosen Umgebung
Procedé de commande d'accès et support d'enregistrement d' un réseau dans un environnment sans fil

(30) Priority: 16.03.2002 KR 2002014276
(43) Date of publication of application: 17.09.2003
(73) Proprietor: SAMSUNG ELECTRONICS CO., LTD., Suwon-City, Kyungki-do (KR)
(72) Inventor: Lee, Kyung-hee, Yongin-city, Kyungki-do (KR)
(74) Representative: Greene, Simon Kenneth

(56) References cited:
- EP-A- 1 081 895
- EP-A- 1 134 929
- YOUNG KIM: "802.11b Wireless LAN Authentication, Encryption, and Security" MICROSOFT CORPORATION, [Online] 31 May 2001 (2001-05-31), XP002250118 Retrieved from the Internet: <URL:http://www.columbia.edu/itc/ee/e6951/ 2002spring/Projects/CVN/report5.pdf> [retrieved on 2003-08-04]
- THOMAS WU: "The Secure Remote Password Protocol" COMPUTER SCIENCE DEPARTMENT STANFORD UNIVERSITY, [Online] 22 November 1997 (1997-11-22), XP002251154 Retrieved from the Internet: <URL:http://srp.stanford.edu/ndss.html> [retrieved on 2003-08-13]
- ABOBA B ET AL: "Secure Remote Password (SRP)" SRP, November 2001 (2001-11), XP002249354 Retrieved from the Internet: <URL:http://grouper.ieee.org/groups/802/11 /Documents/DocumentHolder/1-524.zip> [retrieved on 2003-07-29]

## Description

The present invention relates to a method of controlling an access to a network and protecting communication data in a wireless environment, and more particularly, to an access controlling method using a combination of a wireless local area network (hereinafter referred to as WLAN) terminal authentication and a user authentication.

Generally, WLANs are LANs that transmit and receive data over the air without the need for wired connections, using electromagnetic airwaves, radio and infrared, between computers or between a computer and a communication system other than a computer. WLANs have been developed with the recent rapid advancements of Internet services and wireless communication technologies. Because WLANs are easily installed and maintained, they are increasingly used for network connections between buildings or in places where wired network establishments are difficult, such as, large-scale offices or distribution centers. However, WLANs provide poor security compared with wired networks because, theoretically, anybody can access the transmission medium.

In this regard, there are a lot of security services, such as encryption, access control, authentication, non-repudiation, integrity, or the like. All of them are important, but the authentication function is particularly important in respect of providing quality communication services. In a WLAN, proper authentication is first performed before encryption and access control. An authentication with respect to a terminal is necessarily required for public regions or enterprises to provide a WLAN service and charge users. However, in a WLAN system, the security function of a mechanism for authentication using an existing wired equivalent privacy (WEP) does not work against many attacks.

An authentication mechanism in a conventional IEEE802.11b system is classified into an open-system authentication mechanism and a shared-key authentication mechanism. Only the shared-key authentication mechanism performs authentication using an actual key. The open-system authentication mechanism uses an empty character stream opened upon a WLAN card authentication based on an access point. The access point can be connected to a WLAN card device after unconditionally authenticating the card device, even though the card device does not provide accurate authentication information. In the shared-key authentication mechanism, a particular character stream proposed by an access point to a WLAN card in a challenge procedure is coded into a predetermined key in a response procedure through the challenge-response communication using a shared key pre-determined before resuming communications. Then, the coded character stream can be connected to an access point only if it passes the authentication procedure to obtain an authentication to be transmitted from the WLAN card to the access point.

In an IEEE802.11b system, a terminal authenticates itself to an access point using a WEP supplied by a media access control (MAC) layer. In order to authenticate a terminal to an access point by improving an existing authentication mechanism, an IEEE802.11 a system can adopt an authentication method using a WEP or a method of defining an authentication protocol in an IEEE802.1X environment identical to or superior to the MAC layer.

An authentication protocol using a WEP is based on a challenge-response method using algorithms for challenge and response procedures. In this method, when a terminal codes a challenge received at an access point using a shared key and a WEP and transmits the code to the access point, the access point decodes the challenge using a previously shared key, thereby authenticating the challenger. However, the authentication protocol using WEP is not safe at all against attacks made on a current WEP algorithm.

The other authentication method proposed by an IEEE802.11a system is to authenticate a terminal on a level equal to or higher than an MAC layer. This authentication method is based on an authentication protocol using an extensible authentication protocol (EAP) in an IEEE802.1X environment, but requires a concrete authentication protocol in order to perform authentication at the same level as or higher one than the MAC layer. The IEEE802.1X environment does not define a concrete authentication protocol.

If the IEEE802.1X environment proposes a concrete authentication protocol, the proposed concrete authentication protocol can be applied to provide a terminal authentication function. However, according to a security service based on the terminal authentication, an unauthorized user that acquired a terminal may access a authentication function. However, according to a security service based on the terminal authentication, an unauthorized user that acquired a terminal may access a network although he or she is not the original owner of the terminal. That is, access of users to an enterprise network and a public access service must be controlled.

Next-generation terminals provide accesses to several wireless links. When these accesses are realized within a terminal, authentications for several wireless accesses are required. In order to receive a mutual exchange service of several wireless accesses, a terminal must support authentication for the mutual wireless access. To achieve this, wireless access techniques require an independent mechanism.

In order to authenticate a user, an authentication method using a password is widely used because of the convenience of usage. However, general authentication systems using a password provide a low degree of freedom for a user to select a password. When a password having a size of k bits is selected, and a probability that each of the k bits is 0 or 1 is 0.5, the k-bit password becomes an arbitrary random key. Guessing the random key means making a list of 2^{k} random password candidates. However, when a user selects a password, random selection is almost impossible, and thus the user is exposed to an off-line password guessing attack.

EP1081895 describes a secure WLAN. Each access point generates an authentication message which is transmitted to a wireless device. If the authentication method is from a valid access point, the wireless device sends an encrypted authentication method including for example a device key, user name and password. This is then tested by the access point.

Young Kim, is "802.11 b Wireless LAN Authentication, Encryption and Security, Microsoft Corporation, Online, describes authentication of a WLAN using a MAC layer and a user password.

Wu, is "The secure Remote Password Protocol", XP002251154, from http://srp.stanford.edu/ndss.html, describes a secure password protocol.

Another secure remote password is described in Arorba et al "Secure remote password", XP002249354,
http://grouper.eee.org/groups/802/11 /Documents/DocumentHolder/1-524.zeip.

EP 1134929 (Lucent) describes a secure mutual authentication and key exchange protocol. The protocol is based on a Diffie-Hellman protocol, but the server does not store a password. Instead, the server stores a password verifier which is a function of the password and from which the password cannot be determined.

According to the present invention, there is provided a network access controlling method as set out in claim 1, a method of operating a password authentication client as set out in claim 5, a method of operating a password authentication server as set out in claim 6, a computer recording medium as set out in claim 7 and a password authentication client as set out in claim 8. Advantegous embodiments thereof are defined in the respective dependent claims.

The features and advantages of the present invention will become more apparent by describing in detail a preferred embodiment thereof with reference to the attached drawings in which:
FIG. 1 is a block diagram illustrating a network access controlling method according to the present invention; and
FIG. 2 is a flowchart illustrating a network access controlling method according to the present invention.

The present invention will now be described more fully with reference to the accompanying drawings, in which a preferred embodiment of the invention is shown. This invention may, however, be embodied in different forms and should not be construed as limited to the embodiment set forth herein. Rather, the embodiment is provided so that this disclosure will be thorough and complete, and will fully convey the scope of the invention to those skilled in the art.

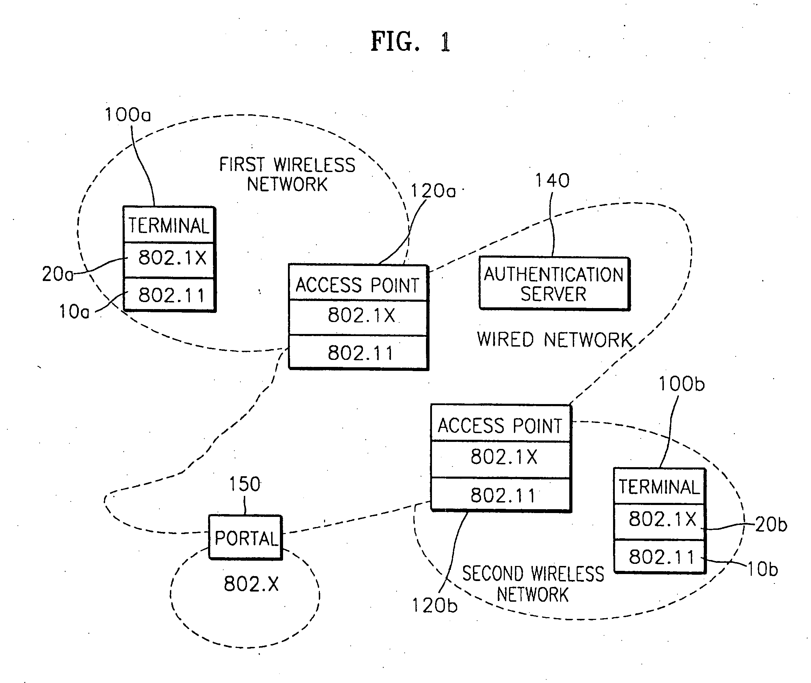

For user authentication, the present invention includes a step of authenticating a terminal possessed by a user and a step of authenticating the user using a password that the user knows. Also, the main bodies of actions, which are a terminal, an access point, and an authentication server existing in a network, are required for the user authentication according to the present invention. FIG. 1 shows the components of a WLAN environment.

Referring to FIG. 1, terminals 100a and 100b have MAC protocol stacks 10a and 10b (e.g., IEEE802.11), respectively, and have frameworks 20a and 20b (e.g., IEEE802.1X), respectively, on the second layer. The MAC protocol stacks 10a and 10b are capable of accessing a wireless link, and the frameworks 20a and 20b enable authentication of a terminal. The terminals 100a and 100b include processors (not shown) for receiving a password from a user and processing the received password. The terminal 100a and an access point 120a constitute a first wireless network, and the terminal 100b and an access point 120b constitute a second wireless network. The terminals 100a and 100b cannot access a host in a wired network without being authenticated by the access points 120a and 120b. The manner in which the access points 120a and 120b process the packets of the terminals 100a and 100b differs depending on where the authentication is performed. For example, in an IEEE802.1X environment, authentication-related packets sent by the terminals 100a and 100b are transmitted to an authentication server 140 in the wired network without undergoing authentication by the access points 120a and 120b.

The access points 120a and 120b are required to access a wired network by wireless, and send an authentication-related packet using a password, which is used in the present invention, to the authentication server 140 in the wired network without any processing. In the IEEE802.1X environment, an access point can simply perform an authentication server function, or can transmit an authentication-related packet to the authentication server 140 while an authentication server in a LAN is assigned to perform a local authentication function.

The authentication server 140 processes authentication messages requested by the terminals 100a and 100b, and stores the session information from the terminals 100a and 100b, the session information with which a user can be charged. That is, the authentication server 140 has the personal information regarding users and records information on the contents of services used by users.

A reference numeral 150 denotes a portal.

Basic operations and parameters required to authenticate a user using a password are as follows.
n: arbitrary large prime number
g: primitive element for mod n
P: user's password
A, B: characters representing a user and an authentication server, respectively
v: a password verifier stored in an authentication server
x_{A}, x_{B}: arbitrary private keys of a user terminal and an authentication server, respectively
y_{A}, y_{B}: arbitrary public keys of a user terminal and an authentication server, respectively. Here, y_{A}= g^{xA}, and y_{B}= g^{xB} (where the uses of x_{A} and y_{A} are slightly different from those of a private key and a public key, respectively, which are used in a general public key coding system).
c_{A}: the confounder of a user terminal. A long random value is generally selected as c_{A}.
h( "): a unidirectional hash function
Eₓ( "): a symmetric key coding algorithm in which x is used as a private key. Since x can have an arbitrary length, a coding algorithm having a key of variable size, such as Blowfish [Sch93], can be used for security, and an Advanced Encryption Standard (AES) newly established as a block coding algorithm standard by the U.S. National Institute of Standard and Technology can also be used.
K: a session key that is shared by a user and an authentication server and can be used for encryption communications later.

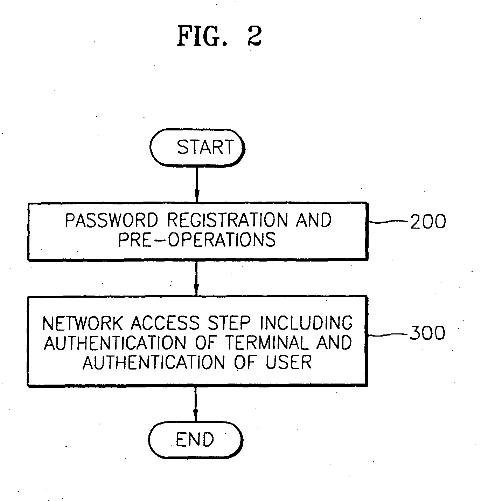

Referring to FIG. 2, a method of controlling user's access to a network, according to the present invention, is composed of two steps. First, an authentication for a terminal is performed. Next, an authentication for the user of the terminal is performed using a password, in step 300. The authentication for the user of a terminal using a password is performed after the following preparatory operations in step 200.

### [Step 200 for password registration and preparatory operations]

First of all, the primitive element g for the mod n is obtained by selecting the arbitrary large prime number n. Here, n and g correspond to information shared by a user terminal and an authentication server.

Next, a user selects his or her password P and calculates the password verifier v = g^{h(P)}. As described above, h( ") is a unidirectional hash function.

Thereafter, the user transmits the value of the password verifier v to the authentication server via a safe channel.

A process in which the user acquires a terminal for the first time and gains authentication from the authentication server will now be described. If the user is not the first user in a certain domain, the fourth sub-step in step 300 for network access can be omitted.

### [Step 300 for network access]

In the first sub-step, authentication of a terminal is completed using an MAC-ID in an IEEE802.1X environment.

In the second sub-step, an Internet Protocol (IP) address is allocated using a dynamic host configuration protocol (DHCP) server or the like.

In the third sub-step, the address of the authentication server is brought.

In the fourth sub-step, the authentication server downloads a password authentication client.

In the fifth sub-step, a user inputs his or her password to the password authentication client.

In the sixth sub-step, authentication between the password authentication client and the authentication server is completed based on the input password.

In the seventh sub-step, the terminal accesses an external/internal network, such as Internet/Intranet, after authentication is approved.

Hereinafter, the sixth sub-step of step 300 (network access) will be described in greater detail. Step 200 (password registration and preparatory operations) must be performed before the sixth sub-step for authentication.

In the sixth sub-step, firstly, the password authentication client calculates a password verifier v = g^{h(P)}, based on an input password P.

Secondly, the password authentication client produces three random values x_{A}, c_{A}, and r.

Thirdly, y_{A} = g^{xA} and Z₁ = h(y_{A}, v, c_{A}) are calculated using the produced random values.

Fourthly, the password authentication client transmits the values Z₁, y_{A}, and r to the authentication server via an access point.

Fifthly, the authentication server stores the received values Z₁ and y_{A} and produces a random value x_{B} to calculate y_{B}= g^{xB}.

Sixthly, the authentication server calculates a session key K =y_{A}^{xB} and h₁ = h(r, v, K), based on the received values y_{A} and r.

Seventhly, the authentication server transmits a message z₂ =Eᵥ (y_{B}, h₁), into which the public key y_{B} of the authentication server and the calculated value h₁ are encoded by a symmetric key encoding system by using a key induced from the password verifier v of the user, to the password authentication client. Here, the length of a required key differs according to a symmetric key encoding system used, but the length of a key required by the password verifier can start from the most significant bit (MSB).

Eighthly, the password authentication client decodes the received encoded message z₂ using the symmetric key encoding system based on a decoding key induced from the password verifier v of the user, and calculates and stores a session key K =y_{B}^{xA}. Thereafter, the password authentication client calculates h ' = h(r, v, K) using the calculated session key and checks whether the calculated value h ' is equal to the received value h₁. If they are not equal, the password authentication client stops a message exchange with the authentication server.

Ninthly, if h ' and h₁ are equal, the password authentication client transmits, to the authentication server, a message z₃ =E_{yB} (c_{A}, K), into which K =y_{B}^{xA} and c_{A} are encoded based on a key induced from the public key y_{B} of the authentication server. A required key length starting from the MSB of y_{B} is obtained according to the used symmetric key encoding system.

Tenthly, the authentication server decodes the received z₃ using a key induced from y_{B} and checks if K =y_{B}^{xA} is equal to K =y_{A}^{xB}. If they are different, the authentication server stops a message exchange with the user authentication client. If K =y_{B}^{xA} is equal to K =y_{A}^{xB}, the authentication server calculates a value h " (=h(y_{A}, v, c_{A})) based on y_{A} stored in the fifth step and the decoded c_{A} and checks if h " is equal to z₁. If they are the same, the authentication server transmits a user authentication success message to the password client. If they are different, the authentication server transmits a user authentication failure message to the password client.

After the authentication between the password authentication client and the authentication server is completed, new secrete information enabling encryption communications is shared by the user and the authentication server.

As described above, a user can be authenticated using a password in the WLAN environment. Regardless of several wireless accesses, a user can be authenticated, such that a terminal can be authenticated even when it roams over a variety of networks.

The use of passwords instead of the management using a media access control identifier (MAC-ID) makes a user-level management possible and can provide an inter-technology hand off function. Mutual authentication is possible without a public key infrastructure (PKI). An Internet key exchange (IKE), which is an authentication protocol used in IP security (IPSec), must depend on the PKI or the like in order to authenticate an opposite party. However, the present invention uses a password-dependent authentication method, so that an authentication system can be easily established without the PKI.

According to the present invention, it is possible to check whether a user has the same key as that of an authentication server. Communication data is safe from password attacks worked in a conventional system using a general password. Authentication of a terminal and authentication of a user are independently performed. Shared secret information, with which encoding communications are performed after authentication, is provided. A key known in a session does not include information on a key used in other sessions. Authentication is efficiently performed.

A protocol for mutual authentication and key exchange between a user and an authentication server, according to the present invention, mainly performs a hash function and a symmetric encoding algorithm except when each host performs modular exponentiation one time to achieve a Diffe-Hellman key exchange. Thus, fast authentication and key exchange are realized.

## Claims

1. A network access controlling method in a wireless environment, the method comprising the steps of:
(a) an access point (120a) completing an authentication for a terminal (100a) using a MAC-ID;
(b) accepting user input of a password to a password authentication client in the terminal (100a);
(c) performing authentication between the password authentication client (120a) and an authentication server (140) based on the input password; and
(d) the terminal (100a) accessing an external/internal network if the authentication in step (a) and the authentication in step (c) are approved, or otherwise, transmitting an authentication failure message to the user;
**characterized by** further comprising the step, between steps (a) and (b), of assigning the terminal (100a) an Internet Protocol address and downloading the password authentication client from the authentication server;
wherein step (b) comprises
(b-1) selecting an arbitrary large prime number n and obtaining the primitive element g for a mod n, the large prime number n and the primitive element g corresponding to information shared by the terminal and the authentication server;
(b-2) calculating a password verifier v =g^{h(P)} from the user-selected password P; and
(b-3) transmitting the password verifier value to the authentication server via a safe channel,
wherein h(·) denotes a unidirectional hash function.

2. The network access controlling method of claim 1, wherein step (a) is performed in an IEEE802.1X environment.

3. The network access controlling method of claim 1 or 2,
wherein step (c) comprises:
(c-1) the password authentication client calculating the value z₁ = h(y_{A}, v, c_{A}) wherein x_{A}, is the secret key of the terminal, c_{A} the confounder of the terminal and y_{A} = g^{xA} is a public key;
(c-2) the password authentication client transmitting the calculated value z₁, the public key y_{A} = g^{xA} and an arbitrary value r to the authentication server via the access point;
(c-3) the authentication server storing the received values z₁ and y_{A} and producing a secret key x_{B} of the authentication server to calculate a public key of the authentication server, y_{B}= g^{xB};
(c-4) the authentication server calculating a session key K =y_{A}^{xB}, and a value h₁ = h(r, v, K), based on the received values y_{A} and r;
(c-5) the authentication server transmitting a message z₂ =Eᵥ (y_{B}, h₁), into which a public key y_{B} of the authentication server and the calculated value h₁ are encoded by a symmetric key encoding system by using a key induced from the password verifier v, to the password authentication client;
(c-6) the password authentication client decoding the received message z₂ using the symmetric key encoding system based on a decoding key induced from the password verifier v of the user, calculating and storing the session key K =y_{B}^{xA}, calculating h ' = h(r, v, K) using the calculated session key, decoding the calculated value h ' , and checking whether the decoded value h ' is equal to the received value h₁;
(c-7) if h ' is not equal to h₁, the password authentication client stopping message exchange with the authentication server, or if h ' and h₁ are equal, the password authentication client transmitting, to the authentication server, a message z₃ =E_{yB} (c_{A}, K), into which K =y_{B}^{xA} and c_{A} are encoded based on a key induced from the public key y_{B} of the authentication server;
(c-8) the authentication server decoding the received value z₃ using a key induced from y_{B} and stopping message exchange with the user authentication client if K =y_{B}^{xA} is different from K =y_{A}^{xB}, or otherwise, calculating a value h" =h(y_{A}, v, c_{A}) based on the value y_{A} stored in step (c-4) and the decoded c_{A}, and checking if h " is equal to z₁; and
(c-9) the authentication server approving a user authentication if h " is equal to z₁, or otherwise, disapproving the user authentication,
wherein Eₓ(·) denotes a symmetric key encoding algorithm using x as a secret key.

4. The network access controlling method of claim 3, wherein step (c-1) comprises:
the password authentication client producing three random values, i.e., the secret key x_{A} of the terminal, the confounder c_{A} of the terminal, and an arbitrary value r, and calculating the public key y_{A}= g^{xA} of the terminal and the value z₁ = h(y_{A}, v, c_{A}) using the produced random values.

5. A method of operation of a password authentication client, including:
calculating a password verifier v = g^{h(P)} based on a user input password P and a value Z₁ = h(y_{A}, v, c_{A}) wherein g is a primitive element, X_{A} is the secret key of the terminal,y_{A} is a public key y_{A} = g^{xA} , and c_{A} the confounder of the terminal, where h () denotes a unidirectional hash function;
transmitting the calculated value Z₁, the public key y_{A} = g^{xA} and an arbitrary value r to an authentication server via the access point, for the authentication server to produce a secret key x_{B}, a public key , Y_{B}= g^{xB}, a session key K =y_{A}^{xB}, and a value h₁ = h(r, v, K), based on the received values y_{A} and r;
accepting a message z₂ =Eᵥ (y_{B}, h₁) from the authentication server, in which the public key y_{B} of the authentication server and the calculated value h₁ are encoded by a symmetric key encoding system by using a key induced from the password verifier v, to the password authentication client;
decoding the received message z₂ using the symmetric key encoding system based on a decoding key induced from the password verifier v of the user, calculating and storing the session key K =y_{B}^{xA}, calculating h ' = h(r, v, K) using the calculated session key, decoding the calculated value h ' , and checking whether the decoded value h ' is equal to the received value h₁;
if h' is not equal to h₁, the password authentication client stopping message exchange with the authentication server, or if h ' and h₁ are equal, the password
transmitting, to the authentication server, a message z₃ =E_{yB} (c_{A}, K), into which K=y_{B}^{xA} and c_{A} are encoded based on a key induced from the public key y_{B} of the authentication server;
wherein Eₓ(·) denotes a symmetric key encoding algorithm using x as a secret key.

6. A method of operation of a password authentication server, including:
receiving a calculated value Z₁, a public key y_{A} = g^{xA} and an arbitrary value r from an authentication client where the password verifier v = g^{h(P)} is based on a user input password P, g is a primitive element and z₁ = h(y_{A}, v, c_{A}) wherein x_{A} is the secret key of the terminal, and c_{A} the confounder of the terminal;
storing the received values z₁ and y_{A} and producing a secret key x_{B} of the authentication server to calculate a public key of the authentication server, y_{B}= g^{xB};
calculating a session key K =y_{A}^{xB}, and a value h₁ = h(r, v, K), based on the received values y_{A} and r;
transmitting to the password authentication client a message z₂ =Eᵥ (y_{B}, h₁), into which a public key y_{B} of the authentication server and the calculated value h₁ are encoded by a symmetric key encoding system by using a key induced from the password verifier v, for the password authentication client to decode the received message z₂ using the symmetric key encoding system based on a decoding key induced from the password verifier v of the user, to calculate the session key K =y_{B}^{xA}, to calculate h ' = h(r, v, K) using the calculated session key, to decode the calculated value h ' , and to check whether the decoded value h ' is equal to the received value h₁;
receiving, if h ' and h₁ are equal, from the authentication client, a message z₃ =E_{yB} (c_{A}, K), into which K =_{YB}^{xA} and c_{A} are encoded based on a key induced from the public key y_{B} of the authentication server;
decoding the received value z₃ using a key induced from y_{B} and stopping message exchange with the user authentication client if K =_{YB}^{XA} is different from K =y_{A}^{xB}, or otherwise, calculating a value h " =h(y_{A}, v, c_{A}) based on the value y_{A} stored in step (c-4) and the decoded c_{A}, and checking if h" is equal to Z₁; and
approving a user authentication if h" is equal to Z₁, or otherwise, disapproving the user authentication,
wherein Eₓ(·) denotes a symmetric key encoding algorithm using x as a secret key.

7. A computer readable recording medium that stores a computer program for executing the method of any claim 5 or 6.

8. An authentication client, comprising:
means for accepting a user password input P;
means for wireless communication with an access point; and
a processor; and
code arranged to cause the processor to carry out the steps of the method of:
calculating a password verifier v = g^{h(P)} based on a user input password P and a value z₁ = h(y_{A}, v, c_{A}) wherein x_{A} is the secret key of the terminal, y_{A} is a public key y_{A} = g^{xA} h denotes a unidirectional hash function, g is a primitive element and c_{A} the confounder of the terminal;
transmitting the calculated value z₁, the public key y_{A} = g^{xA} and an arbitrary value r to an authentication server via the access point, for the authentication server to produce a secret key x_{B}, a public key , y_{B}= g^{xB}, a session key K =y_{A}^{xB}, and a value h₁ = h(r, v, K), based on the received values y_{A} and r;
accepting a message z₂ =Eᵥ (y_{B}, h₁) from the authentication server, in which the public key y_{B} of the authentication server and the calculated value h₁ are encoded by a symmetric key encoding system by using a key induced from the password verifier v, to the password authentication client; decoding the received message z₂ using the symmetric key encoding system based on a decoding key induced from the password verifier v of the user, calculating and storing the session key K =y_{B}^{xA}, calculating h ' = h(r, v, K) using the calculated session key, decoding the calculated value h ' , and checking whether the decoded value h ' is equal to the received value h₁;
if h' is not equal to h₁, the password authentication client stopping message exchange with the authentication server, or if hand h₁ are equal, the password transmitting, to the authentication server, a message z₃ =E_{yB} (c_{A}, K), into which K =Y_{B}^{xA} and c_{A} are encoded based on a key induced from the public key y_{B} of the authentication server;
wherein Eₓ(·) denotes a symmetric key encoding algorithm using x as a secret key.

## Patentansprüche

1. Verfahren zur Steuerung des Netzwerkzugangs in einem drahtlosen System, wobei das Verfahren die Schritte umfasst:
(a) Ausführen einer Autentifizierung für ein Terminal (100a) unter Verwendung einer MAC-ID in einem Zugangspunkt (120a);
(b) Annehmen einer Benutzereingabe eines Passworts an einen Passwortautentifizierungsclient im Terminal (100a);
(c) Durchführen einer Autentifizierung zwischen dem Passwortautentifizierungsclient (120a) und einem Autentifizierungsserver (140) basierend auf dem eingegebenen Passwort; und
(d) Zugriff des Terminals (100a) auf ein externes/internes Netzwerk, wenn die Autentifizierung in Schritt (a) und die Autentifizierung in Schritt (c) akzeptiert sind, oder ansonsten Übertragen einer Autentifizierungsfehlermeldung an den Benutzer;
**gekennzeichnet durch** den Schritt zwischen den Schritten (a) und (b):
Zuweisen einer Internet-Protokoll-Adresse an das Terminal (100a) und Herunterladen des Passwortautentifizierungsclient vom Autentifizierungsserver; wobei der Schritt (b) umfasst:
(b-1) Auswählen einer Primzahl n mit beliebiger Größe und Ermitteln des primitiven Elements g für ein mod n; wobei die große Primzahl n und das primitive Element g Informationen entsprechen, die das Terminal und der Autentifizierungsserver gemeinsam nutzen;
(b-2) Berechnen eines Passwortverifizierungswerts v = g^{h(p)} aus dem vom Benutzer gewählten Passwort P; und
(b-3) Übertragen des Passwortverifizierungswerts an den Autentifizierungsserver über einen sicheren Kanal,
wobei h(·) eine unidirektionale Hash-Funktion bezeichnet.

2. Verfahren zur Steuerung des Netzwerkzugangs nach Anspruch 1, wobei Schritt (a) in einem IEEE802.1X-System durchgeführt wird.

3. Verfahren zur Steuerung des Netzwerkzugangs nach Anspruch 1 oder 2, wobei Schritt (c) umfasst:
(c-1) Berechnen des Werts z₁ = h(y_{A}, v, C_{A}) durch den Passwortautentifizierungsclient, wobei X_{A} der Geheimschlüssel des Terminals ist, C_{A} der Confounder des Terminals ist und y_{A} = g^{xA} ein öffentlicher Schlüssel ist;
(c-2) Übertragen des berechneten Werts Z₁, des öffentlichen Schlüssels y_{A} = g^{xA} und eines beliebigen Werts r durch den Passwortautentifizierungsclient an den Autentifizierungsserver über den Zugangspunkt;
(c-3) Speichern der empfangenen Werte z₁ und y_{A} durch den Autentifizierungsserver und Erzeugen eines Geheimschlüssels x_{B} des Autentifizierungsservers zum Berechnen eines öffentlichen Schlüssels des Autentifizierungsservers, y_{B} = g^{xB};
(c-4) Berechnen eines Session-Key K = y_{A}^{xB} und eines Werts h₁ = h(r, v, K) basierend auf den erhaltenen Werten y_{A} und r durch den Autentifizierungsserver;
(c-5) Übertragen einer Nachricht z₂ = Eᵥ (y_{B}, h₁) durch den Autentifizierungsserver an den Passwortautentifizierungsclient, in die ein öffentlicher Schlüssel y_{B} des Autentifizierungsservers und der berechnete Wert h₁ nach einem symmetrischen Schlüsselcodiersystem eincodiert sind, unter Verwendung eines durch den Passwortverifizierungswert v induzierten Schlüssels;
(c-6) Decodieren der erhaltenen Nachricht Z₂ durch den Passwortautentifizierungsclient unter Verwendung des symmetrischen Schlüsselcodiersystems basierend auf einem durch den Passwortverifizierungswert v des Benutzers induzierten Decodierschlüssel, Berechnen und Speichern des Session-Key K = y_{B}^{xA}, Berechnen von h' = h(r, v, K) unter Verwendung des berechneten Session-Key, Decodieren des berechneten Werts h' und Prüfen, ob der decodierte Wert h' gleich dem empfangenen Wert h₁ ist;
(c-7) wenn h' nicht gleich h₁ ist, Stoppen des Nachrichtenaustauschs mit dem Autentifizierungsserver durch den Passwortautentifizierungsclient, oder wenn h' und h₁ gleich sind, Übertragen einer Nachricht z₃ = E_{yB} (c_{A}, K) durch den Passwortautentifizierungsclient an den Autentifizierungsserver, in der K = y_{B}^{xA} und C_{A} basierend auf einem vom öffentlichen Schlüssel y_{B} des Autentifizierungsservers induzierten Schlüssel codiert sind;
(c-8) Decodieren des erhaltenen Werts z₃ durch den Autentifizierungsserver unter Verwendung eines von y_{B} induzierten Schlüssels und Stoppen des Nachrichtenaustauschs mit dem Autentifizierungsclient, wenn K = y_{B}^{xA} sich von K = _{YA}^{xB} unterscheidet, oder ansonsten Berechnen eines Werts h" = h(y_{A}, v, c_{A}) basierend auf dem in Schritt (c-4) gespeicherten Wert y_{A} und dem decodierten _{CA} und Prüfen, ob h" gleich Z₁ ist; und
(c-9) Akzeptieren einer Benutzerautentifizierung durch den Autentifizierungsserver, wenn h" gleich Z₁ ist, oder ansonsten Ablehnen der Benutzerautentifizierung,
wobei Eₓ(·) einen symmetrischen Schlüsselcodierungsalgorithmus bezeichnet, der x als Geheimschlüssel verwendet.

4. Verfahren zur Steuerung des Netzwerkzugangs nach Anspruch 3, wobei Schritt (c-1) umfasst:
Erzeugen dreier statistischer Werte durch den Passwortautentifizierungsclient, d. h. des Geheimschlüssels X_{A} des Terminals, des Confounders C_{A} des Terminals und eines beliebigen Werts r, und Berechnen des öffentlichen Schlüssels y_{A} = g^{xA} des Terminals und des Werts z₁ = h(y_{A}, v, c_{A}) unter Verwendung der erzeugten statistischen Werte.

5. Verfahren zum Betrieb eines Passwortautentifizierungsclient umfassend:
Berechnen eines Passwortverifizierungswerts v = g^{h(p)} basierend auf einem vom Benutzer eingegebenen Passwort P und einem Wert z₁ = h(y_{A}, v, c_{A}), wobei g ein primitives Element ist, x_{A} der Geheimschlüssel des Terminals ist, y_{A} ein öffentlicher Schlüssel y_{A} = g^{xA} ist und c_{A} der Confounder des Terminals ist, wobei h(·) eine unidirektionale Hash-Funktion bezeichnet;
Übertragen des berechneten Werts z₁, des öffentlichen Schlüssels y_{A} =g^{xA} und eines zufälligen Werts r an einen Autentifizierungsserver über den Zugangspunkt, damit der Autentifizierungsserver einen Geheimschlüssel x_{B}, einen öffentlichen Schlüssel y_{B} = g^{xB}, einen Session-Key K = y_{A}^{xB} und einen Wert h₁ = h(r, v, K) basierend auf den empfangenen Werten y_{A} und r erzeugt; Annehmen einer Nachricht z₂ = Eᵥ (y_{B}, h₁) vom Autentifizierungsserver zum Passwortautentifizierungsclient, in der der öffentliche Schlüssel y_{B} des Autentifizierungsservers und der berechnete Wert h₁ nach einem symmetrischen Schlüsselcodiersystem unter Verwendung eines durch den Passwortverifizierungswert v induzierten Schlüssels eincodiert sind;
Decodieren der erhaltenen Nachricht z₂ unter Verwendung des symmetrischen Schlüsselcodiersystems basierend auf einem durch den Passwortverifizierungswert v des Benutzers induzierten Decodierschlüssel, Berechnen und Speichern des Session-Key K = y_{B}^{xA}, Berechnen von h' = h(r, v, K) unter Verwendung des berechneten Session-Key, Decodieren des berechneten Werts h' und Prüfen, ob der decodierte Wert h' gleich dem empfangenen Wert h₁ ist;
wenn h' nicht gleich h₁ ist, Stoppen des Nachrichtenaustauschs mit dem Autentifizierungsserver durch den Passwortautentifizierungsclient, oder wenn h' und h₁ gleich sind, Übertragen einer Nachricht z₃ = Ey_{B} (c_{A}, K) durch den Passwortautentifizierungsclient an den Autentifizierungsserver, in der K = y_{B}^{xA} und C_{A} basierend auf einem vom öffentlichen Schlüssel y_{B} induzierten Schlüssel des Autentifizierungsservers codiert sind;
wobei Eₓ(·) einen symmetrischen Schlüsselcodierungsalgorithmus bezeichnet, der x als Geheimschlüssel verwendet.

6. Verfahren zum Betrieb eines Passwortautentifizierungsservers umfassend:
Empfangen eines berechneten Werts z₁, eines öffentlichen Schlüssels y_{A} = g^{xA} und eines zufälligen Werts r von einem Autentifizierungsclient, wobei der Passwortverifizierungswert v = g^{h(p)} auf einem vom Benutzer eingegebenen Passwort P basiert, g ein primitives Element ist und z₁ = h(y_{A}, v, c_{A}), wobei x_{A} der Geheimschlüssel des Terminals und c_{A} der Confounder des Terminals sind;
Speichern der empfangenen Werte z₁ und y_{A} und Erzeugen eines Geheimschlüssels x_{B} des Autentifizierungsservers zum Berechnen eines öffentlichen Schlüssels des Autentifizierungsservers y_{B} = g^{xB};
Berechnen eines Session-Key K = y_{A}^{xB} und eines Werts h₁ = h(r, v, K) basierend auf den empfangenen Werten y_{A} und r;
Übertragen einer Nachricht z₂ = Eᵥ (y_{B}, h₁) an den Passwortautentifizierungsclient, in die ein öffentlicher Schlüssel y_{B} des Autentifizierungsservers und der berechnete Wert h₁ nach einem symmetrischen Schlüsselcodiersystem unter Verwendung eines durch den Passwortverifizierungswert v induzierten Schlüssels eincodiert sind, damit der Passwortautentifizierungsclient die erhaltene Nachricht z₂ unter Verwendung des symmetrischen Schlüsselcodiersystems basierend auf einem durch den Passwortverifizierungswert v des Benutzers induzierten Decodierschlüssel decodiert, den Session-Key K = y_{B}^{xA} berechnet, h' = h(r, v, K) unter Verwendung des berechneten Session-Keys berechnet, den berechneten Wert h' decodiert und prüft, ob der decodierte Wert h' gleich dem empfangenen Wert h₁ ist;
wenn h' und h₁ gleich sind, Empfangen einer Nachricht z₃ = E_{yB} (c_{A}, K) vom Autentifizierungsclient, in der K = y_{B}^{xA} und c_{A} basierend auf einem vom öffentlichen Schlüssel y_{B} des Autentifizierungsservers induzierten Schlüssel codiert sind;
Decodieren des empfangenen Werts z₃ unter Verwendung eines von y_{B} induzierten Schlüssels und Stoppen des Nachrichtenaustauschs mit dem Benutzerautentifizierungsclient, wenn K = y_{B}^{xA} sich von K = y_{A}^{xB} unterscheidet, oder ansonsten Berechnen eines Werts h" = h(y_{A}, v, c_{A}) basierend auf dem in Schritt (c-4) gespeicherten Wert y_{A} und dem decodierten c_{A} und Prüfen, ob h" gleich Z₁ ist; und
Akzeptieren einer Benutzerautentifizierung, wenn h" gleich z₁ ist, oder ansonsten Ablehnen der Benutzerautentifizierung,
wobei Eₓ(·) einen symmetrischen Schlüsselcodierungsalgorithmus bezeichnet, der x als Geheimschlüssel verwendet.

7. Computerlesbares Aufzeichnungsmedium, das ein Computerprogramm zur Ausführung des Verfahrens nach einem der Ansprüche 5 oder 6 speichert.

8. Autentifizierungsclient umfassend:
Mittel zum Akzeptieren eines eingegebenen Benutzerpassworts P;
Mittel zur drahtlosen Kommunikation mit einem Zugangspunkt; und einen Prozessor; und
Code so ausgebildet, dass der Prozessor veranlasst wird, die Schritte des Verfahrens auszuführen:
Berechnen eines Passwortverifizierungswerts v = g^{h(p)} basierend auf einem vom Benutzer eingegebenen Passwort P und einem Wert z₁ = h(y_{A}, v, c_{A}),
wobei x_{A} der Geheimschlüssel des Terminals ist, y_{A} ein öffentlicher Schlüssel y_{A} = g^{xA} ist, h(·) eine unidirektionale Hash-Funktion bezeichnet und g ein primitives Element und c_{A} der Confounder des Terminals sind;
Übertragen des berechneten Werts Z₁, des öffentlichen Schlüssels y_{A} = g^{xA} und eines zufälligen Werts r an einen Autentifizierungsserver über den Zugangspunkt, damit der Autentifizierungsserver einen Geheimschlüssel x_{B}, einen öffentlichen Schlüssel y_{B} = g^{xB}, einen Session-Key K = y_{A}^{xB} und einen Wert h₁ = h(r, v, K) basierend auf den empfangenen Werten y_{A} und r erzeugt; Annehmen einer Nachricht z₂ = Eᵥ (y_{B}, h₁) vom Autentifizierungsserver zum Passwortautentifizierungsclient, in der der öffentliche Schlüssel y_{B} des Autentifizierungsservers und der berechnete Wert h₁ nach einem symmetrischen Schlüsselcodiersystem unter Verwendung eines durch den Passwortverifizierungswert v induzierten Schlüssels eincodiert sind;
Decodieren der empfangenen Nachricht z₂ unter Verwendung des symmetrischen Schlüsselcodiersystems basierend auf einem durch den Passwortverifizierungswert v des Benutzers induzierten Decodierschlüssel, Berechnen und Speichern des Session-Key K = y_{B}^{xA}, Berechnen von h' = h(r, v, K) unter Verwendung des berechneten Session-Key, Decodieren des berechneten Werts h' und Prüfen, ob der decodierte Wert h' gleich dem empfangenen Wert h₁ ist;
wenn h' nicht gleich h₁ ist, Stoppen des Nachrichtenaustauschs mit dem Autentifizierungsserver durch den Passwortautentifizierungsclient, oder wenn h' und h₁ gleich sind, Übertragen einer Nachricht z₃ = E_{yB} (c_{A}, K) durch den Passwortautentifizierungsclient an den Autentifizierungsserver, in der K = y_{B}^{xA} und c_{A} basierend auf einem vom öffentlichen Schlüssel y_{B} des Autentifizierungservers induzierten Schlüssel codiert sind;
wobei Eₓ(·) einen symmetrischen Schlüsselcodierungsalgorithmus bezeichnet, der x als Geheimschlüssel verwendet.

## Revendications

1. Procédé de commande d'accès de réseau dans un environnement sans fil, le procédé comprenant les étapes consistant à :
(a) un point d'accès (120a) effectuant une authentification pour un terminal (100a) en utilisant un MAC-ID ;
(b) accepter l'entrée par un utilisateur d'un mot de passe sur un client d'authentification de mot de passe dans le terminal (100a) ;
(c) effectuer l'authentification entre le client d'authentification de mot de passe (120a) et un serveur d'authentification (140) sur la base du mot de passe entré ; et
(d) le terminal (100a) accèdant à un réseau externe/interne si l'authentification à l'étape
(a) et l'authentification à l'étape (c) sont approuvées, ou sinon, transmettre un message d'échec d'authentification à l'utilisateur ;
**caractérisé en ce qu'**il comprend en outre l'étape, entre les étapes (a) et (b), consistant à assigner au terminal (100a) une adresse de protocole Internet et télécharger le client d'authentification de mot de passe du serveur d'authentification ;
dans lequel l'étape (b) comprend les étapes consistant à :
(b-1) sélectionner un grand nombre premier arbitraire n et obtenir l'élément primitif g modulo n, le grand nombre premier n et l'élément primitif g correspondant aux informations partagées par le terminal et le serveur d'authentification ;
(b-2) calculer une valeur de vérification de mot de passe v = g^{h(P)} à partir du mot de passe sélectionné par l'utilisateur P ; et
(b-3) transmettre la valeur de vérification de mot de passe au serveur d'authentification par le biais d'un canal sûr,
dans lequel h(·) représente une fonction de hachage unidirectionnel.

2. Procédé de commande d'accès de réseau selon la revendication 1, dans lequel l'étape (a) est effectuée dans un environnement IEEE802.1X.

3. Procédé de commande d'accès de réseau selon la revendication 1 ou 2,
dans lequel l'étape (c) comprend les étapes consistant à :
(c-1) le client d'authentification de mot de passe calcule la valeur *z*₁ = *h(y_{A},v,c_{A})* dans lequel x *_{A}* est la clé secrète du terminal, C *_{A}* est la variable confondue du terminal et y *_{A}* = g^{xA} est une clé publique ;
(c-2) le client d'authentification de mot de passe transmet la valeur calculée z₁, la clé publique y *_{A}* = g^{xA} et une valeur arbitraire r au serveur d'authentification par le biais du point d'accès ;
(c-3) le serveur d'authentification stocke les valeurs reçues Z ₁ et *y* _{A} et produit une clé secrète x *_{B}* du serveur d'authentification pour calculer une clé publique du serveur d'authentification y*_{B}* = g^{xB};
(c-4) le serveur d'authentification calcule une clé de session K = y_{A}^{xB}, et une valeur h₁ = h(r, v, K) sur la base des valeurs reçues y*_{A}* et r ;
(c-5) le serveur d'authentification transmet un message z₂ = E*ᵥ* (y *_{B}*, h ₁), dans lequel une clé publique y *_{B}* du serveur d'authentification et la valeur calculée h₁ sont codées par un système de codage de clé symétrique en utilisant une clé induite à partir de la valeur de vérification de mot de passe v, au client d'authentification de mot de passe ;
(c-6) le client d'authentification de mot de passe décode le message reçu z₂, en utilisant le système de codage de clé symétrique sur la base d'une clé de décodage induite à partir de la valeur de vérification de mot de passe v de l'utilisateur, calcule et stocke la clé de session K = y*_{B}*^{xA}, calcule h' = h(r, v, K) en utilisant la clé de session calculée, décode la valeur calculée h', et vérifie si la valeur décodée h' est égale à la valeur reçue h₁ ;
(c-7) si h' n'est pas égale à h₁, le client d'authentification de mot de passe arrête l'échange de message avec le serveur d'authentification, ou si h' et h₁ sont égales, le client d'authentification de mot de passe transmet, au serveur d'authentification, un message z₃ = *E_{YB}(C_{A},* K), dans lequel K = _{YB}^{XA} et c_{A} sont codés sur la base d'une clé induite à partir de la clé publique y _{B} du serveur d'authentification ;
(c-8) le serveur d'authentification décode la valeur reçue z₃ en utilisant une clé induite à partir de y*_{B}* et arrête l'échange de message avec le client d'authentification d'utilisateur si K = y_{B}^{xA} est différent de K = y *_{A}* ^{xB}, ou sinon calcule une valeur h" = h (y *_{A}* , v, *c _{A}*) sur la base de la valeur y_{A} stockée à l'étape (c-4) et de la valeur c *_{A}* décodée, et vérifie si y" est égal à z₁; et
(c-9) le serveur d'authentification approuve une authentification d'utilisateur si h " est égale à z₁ ou sinon désapprouve l'authentification d'utilisateur,
dans lequel E *ₓ* (•) représente un algorithme de codage de clé symétrique utilisant x comme clé secrète.

4. Procédé de commandes d'accès de réseau selon la revendication 3, dans lequel l'étape (c-1) comprend l'étape consistant à :
le client d'authentification de mot de passe produit trois valeurs aléatoires, c'est-à-dire la clé secrète x *_{A}* du terminal, la variable confondue C *_{A}* du terminal, et une valeur arbitraire r, et calcule la clé publique y *_{A} =* g^{xA} du terminal et la valeur z₁ = h(*y_{A}*, v, *c_{A}*) en utilisant les valeurs aléatoires produites.

5. Procédé d'exploitation d'un client d'authentification de mot de passe, comprenant les étapes consistant à :
calculer une valeur de vérification de mot de passe v = g^{h(P)} sur la base d'un mot de passe entré par l'utilisateur P et d'une valeur z ₁ = h (y*_{A}*, v, *c_{A}*) dans lequel g est un élément primitif, x*_{A}* est la clé secrète du terminal, y*_{A}* est une clé publique y *_{A}* = g^{xA}, et c *_{A}* est la valeur confondue du terminal, où h(•) représente une fonction de hachage unidirectionnelle ;
transmettre la valeur calculée z₁, la clé publique y*_{A}* = g^{xA} et une valeur arbitraire r à un serveur d'authentification par le biais du point d'accès, pour que le serveur d'authentification produise une clé secrète x*_{B}*, une clé publique y *_{B}* = g^{xB}, une clé de session K = y*_{A}*^{xB}, et une valeur h ₁ = h(r, v, K) sur la base des valeurs reçues y*_{A}* et r ;
accepter un message z₂ = E*ᵥ* (y*_{B}*, h₁) du serveur d'authentification, dans lequel la clé publique y*_{B}* du serveur d'authentification et la valeur calculée h₁ sont codées par un système de codage de clé symétrique en utilisant une clé induite de la valeur de vérification de mot de passe v au client d'authentification de mot de passe ;
décoder le message reçu z₂ en utilisant le système de codage de clé symétrique sur la base d'une clé de décodage induite de la valeur de vérification de mot de passe v de l'utilisateur, calculer et stocker la clé de session K = y*_{B}*^{xA}, calculer h' = h(r, v, k) en utilisant la clé de session calculée, décoder la valeur calculée h', et vérifier si la valeur décodée h' est égale à la valeur reçue h₁ ;
si h' n'est pas égale à h₁, le client d'authentification de mot de passe arrête l'échange de message avec le serveur d'authentification, ou si h' et h₁ sont égales, le client d'authentification de mot de passe transmet au serveur d'authentification un message z₃ = *E_{yB}*(*c_{A},* K), dans lequel K = *y_{B}*^{xA} et *c_{A}* sont codées sur la base d'une clé induite à partir de la clé publique y *_{B}* du serveur d'authentification ;
dans lequel E*ₓ* (•) représente un algorithme de codage de clé symétrique utilisant x comme clé secrète.

6. Procédé d'exploitation d'un serveur d'authentification de mot de passe, comprenant les étapes consistant à :
recevoir une valeur calculée z₁, une clé publique y *_{A}* = g^{xA} et une valeur arbitraire r d'un client d'authentification où la valeur de vérification de mot de passe v = g^{h(P)} est basée sur un mot de passe entré par l'utilisateur P, g est un élément primitif et z₁ = h (y*_{A}* , v, *c_{A}*) dans lequel x*_{A}* est la clé secrète du terminal et c*_{A}* est la valeur confondue du terminal ;
stocker les valeurs reçues z₁ et y*_{A}* et produire une clé secrète x*_{B}* du serveur d'authentification pour calculer une clé publique du serveur d'authentification y*_{B}* = g^{xB} ;
calculer une clé de session K = y*_{A}*^{xB}, et une valeur h₁ = h(r, v, K) sur la base des valeurs reçues y*_{A}* et r ;
transmettre au client d'authentification de mot de passe un message z₂ = E*ᵥ*(y*_{B},* h₁), dans lequel une clé publique y*_{B}* du serveur d'authentification et la valeur calculée h₁ sont codées par un système de codage de clé symétrique en utilisant une clé induite de la valeur de vérification de mot de passe v, pour que le client d'authentification de mot de passe décode le message reçu z₂ en utilisant le système de codage de clé symétrique sur la base d'une clé de décodage induite à partir de la valeur de vérification de mot de passe v de l'utilisateur, pour calculer la clé de session K = y*_{B}*^{xA}, pour calculer h' = h(r, v, K) en utilisant la clé de session calculée, pour décoder la valeur calculée h' et pour vérifier si la valeur décodée h' est égale à la valeur reçue h₁ ;
recevoir, si h' et h₁ sont égales, du client d'authentification, un message z₃ = E*_{yB}* (*c_{A},* K) dans lequel K = y*_{B}*^{xA} et c*_{A}* sont codées sur la base d'une clé induite à partir de la clé publique y*_{B}* du serveur d'authentification ;
décoder la valeur reçue z₃ en utilisant une clé induite à partir de y*_{B}* et arrêter l'échange de message avec le client d'authentification d'utilisateurs si K = y *_{B}*^{xA} est différente de K = y*_{A}*^{xB}*,* sinon calculer une valeur h" = h(y*_{A}*, v, c *_{A}*) sur la base de la valeur y*_{A}* stockée à l'étape (c-4) et la valeur décodée c *_{A}*, et vérifier si h" est égale à z₁ ; et
approuver une authentification d'utilisateur si h" est égale à z₁, sinon désapprouver l'authentification d'utilisateur,
dans lequel E*ₓ* (•) représente un algorithme de codage de clé symétrique utilisant x comme clé secrète.

7. Support d'enregistrement lisible par ordinateur qui stocke un programme d'ordinateur pour exécuter le procédé selon l'une quelconque des revendications 5 et 6.

8. Client d'authentification comprenant:
des moyens pour accepter une entrée de mot de passe d'utilisateur P ;
des moyens de communication sans fil avec un point d'accès ;
un processeur ; et
un code agencé pour amener le processeur à effectuer les étapes du procédé consistant à :
calculer une valeur de vérification de mot de passe v = g^{h(P)} sur la base d'un mot de passe entré par l'utilisateur P et d'une valeur z₁ = h (y*_{A}* , v, c*_{A}*) dans lequel x*_{A}* est la clé secrète du terminal, y*_{A}* est une clé publique y*_{A}*, h ( ) représente une fonction de hachage unidirectionnelle, g est un élément primitif et c*_{A}* est la valeur confondue du terminal;
transmettre la valeur calculée z₁ la clé publique y*_{A}* = g^{xA} et une valeur arbitraire r à un serveur d'authentification par le biais du point d'accès, pour que le serveur d'authentification produise une clé secrète x*_{B}*, une clé publique y*_{B}* = g^{xB}, une clé de session K = y*_{A}*^{xB}, et une valeur h₁ = h(r, v, K) sur la base des valeurs reçues Y*_{A}* et r ;
accepter un message z₂ = E*ᵥ* (y*_{B} ,* h₁) du serveur d'authentification, dans lequel la clé publique y*_{B}* du serveur d'authentification et la valeur calculée h₁ sont codées par un système de codage de clé symétrique en utilisant une clé induite de la valeur de vérification de mot de passe v au client d'authentification de mot de passe ; décoder le message reçu z₂ en utilisant le système de codage de clé symétrique sur la base d'une clé de décodage induite de la valeur de vérification de mot de passe v de l'utilisateur, calculer et stocker la clé de session K = y*_{B}*^{xA}, calculer h' = h(r, v, k) en utilisant la clé de session calculée, décoder la valeur calculée h', et vérifier si la valeur décodée h' est égale à la valeur reçue h₁;
si h' n'est pas égale à h₁, le client d'authentification de mot de passe arrête l'échange de message avec le serveur d'authentification, ou si h' et h₁ sont égales, le client d'authentification de mot de passe transmet au serveur d'authentification un message z₃ = E*_{yB}* (c*_{A}*, K), dans lequel K = y*_{B}*^{xA} et c*_{A}* sont codées sur la base d'une clé induite à partir de la clé publique y*_{B}* du serveur d'authentification ;
dans lequel E*ₓ* (•) représente un algorithme de codage de clé symétrique utilisant x comme clé secrète.
